# EUROPÄISCHE PATENTANMELDUNG

(11) **EP 2 713 470 A1**
(43) Veröffentlichungstag der Anmeldung: **02.04.2014**
(21) Anmeldenummer: 12186787.3
(22) Anmeldetag: 01.10.2012
(51) Int. Cl.: H02J 5/00, H02J 7/02

(54) **Schaltungsanordnung mit einem Resonanzwandler und Verfahren zum Betreiben eines Resonanzwandlers**

(71) Anmelder: Siemens Aktiengesellschaft, 80333 München (DE)
(72) Erfinder: Rupf, Stephan, 09236 Claussnitz (DE)

(57) **Zusammenfassung**

Schaltungsanordnung (28), umfassend einen zum Betrieb im überresonanten Bereich ausgebildeten, in eine primärseitige Wicklung (6) eines Transformators (5) Energie einspeisenden Resonanzwandler (12) sowie eine zu dessen Ansteuerung vorgesehene Ansteuerschaltung (34), welche mehrere Module (29,30, 31,32), nämlich
- einen mit variabler Frequenz steuerbaren Frequenzgenerator (29),
- eine zum Schutz von Halbleiterbauteilen des Resonanzwandlers (12) ausgebildete Kurzschlussüberwachungseinheit (30),
- eine Resonanzfehlerüberwachungseinheit (31), sowie
- eine Resonanztrenderkennungseinheit (32)
aufweist, wobei die Resonanztrenderkennungseinheit (32) zur Nachregelung der Frequenz des Resonanzwandlers (12) ausgebildet ist, um eine Annäherung des Betriebs des Resonanzwandlers (12) an den Resonanzbereich auszugleichen, und wobei die Resonanzfehlerüberwachungseinheit (31) zur Abschaltung des Resonanzwandlers (12) bei Detektion einer Annäherung des Betriebs des Resonanzwandlers (12) an den Resonanzbereich ausgebildet ist.

## Beschreibung

Die Erfindung betrifft eine Schaltungsanordnung mit einem Resonanzwandler sowie ein Verfahren zum Betreiben eines Resonanzwandlers.

Ein Resonanzwandler ist ein Gleichspannungswandler, welcher mit einem Schwingkreis arbeitet und eine Gleichspannung in eine ein- oder mehrphasige Wechselspannung wandelt. Sofern am Ausgang des Resonanzwandlers keine Gleichrichtung erfolgt, wird dieser auch als Inverter bezeichnet.

Einfache Bauformen von Invertern, welche jeweils mit einem Paar an Transistoren als Schaltelementen arbeiten, sind beispielsweise aus der US 2,783,384 A bekannt.

Aus der DE 10 2008 027 126 A1 ist ein Verfahren zum Betreiben eines Schwingkreises mit mindestens zwei elektronischen Schaltern bekannt. Der Schwingkreis, welcher innerhalb eines Resonanzwandlers gebildet ist, soll abgeschaltet werden, wenn während des Abschaltens oder nach dem Abschalten eines der Schalter ein Strom durch diesen Schalter einen vorgegebenen Schwellwert erreicht oder unterschreitet. Der Resonanzwandler dient der Leistungsübertragung zwischen einem Leistungsteil (Generator) und einem galvanisch davon getrennten Verbraucherteil mittels eines Transformators, wobei Leistungsteil und Verbraucherteil Teil eines Haushaltsgerätssystems sein können. Als Beispiel ist in der DE 10 2008 027 126 A1 eine Kaffeemaschine genannt.

Aus der EP 0 820 653 B1 ist ein Traktionsbatterieladesystem mit induktiver Ankopplung bekannt. Hierbei wird Ladeenergie von einer Ladestation an ein Elektrofahrzeug als Wechselstrom im Bereich von 10 kHz bis zu 200 kHz übertragen und im Elektrofahrzeug gleichgerichtet. Das Traktionsbatterieladesystem soll insbesondere für Fahrzeuge geeignet sein, welche mit einem Batterieenergie-Managementsystem (BEMS) ausgerüstet sind. Ein bordinternes batteriespezifisches Ladesteuermodul, das im Elektrofahrzeug vorhanden ist, trifft Entscheidungen und schickt Signale bezüglich der Größe und des Zeitpunkts des Ladestroms an die Ladestation. Die Ladestation wird in der EP 0 820 653 B1 als universell in dem Sinne bezeichnet, dass eine Vielzahl verschiedener Elektrofahrzeuge anschließbar sein soll.

Der Erfindung liegt die Aufgabe zugrunde, einen Resonanzwandler, welcher zum Einsatz in einem kabellosen Batterieladesystem, insbesondere für Elektrofahrzeuge, geeignet ist, sowohl besonders zuverlässig als auch wirtschaftlich zu betreiben.

Diese Aufgabe wird erfindungsgemäß gelöst durch eine einen Resonanzwandler umfassende Schaltungsanordnung mit den Merkmalen des Anspruchs 1 sowie durch ein Verfahren zum Betreiben eines Resonanzwandlers mit den Merkmalen des Anspruchs 11. Vorteilhafte Ausgestaltungen und Weiterentwicklungen der Erfindung sind Gegenstand der Unteransprüche. Im Folgenden im Zusammenhang mit der Schaltungsanordnung erläuterte Ausgestaltungen und Vorteile gelten sinngemäß auch für das Verfahren und umgekehrt.

Die Schaltungsanordnung umfasst einen zum Betrieb im überresonanten Bereich ausgebildeten, in eine Primärspule eines Transformators Energie einspeisenden Resonanzwandler sowie eine zu dessen Ansteuerung vorgesehene Ansteuerschaltung, welche mehrere Module, nämlich
- einen mit variabler Frequenz betreibbaren Frequenzgenerator,
- eine zum Schutz von Halbleiterbauteilen des Resonanzwandlers ausgebildete Kurzschlussüberwachungseinheit,
- eine Resonanzfehlerüberwachungseinheit, sowie
- eine Resonanztrenderkennungseinheit
aufweist. Die Resonanztrenderkennungseinheit ist dabei zur Nachregelung der Frequenz des Resonanzwandlers ausgebildet, so dass - sofern möglich - eine Annäherung des Betriebs des Resonanzwandlers an den Resonanzbereich ausgeglichen wird. Als "Nachregelung" ist dabei eine geregelte Variation der Frequenz des Resonanzwandlers bezeichnet, die insbesondere in Reaktion auf eine Änderung der Resonanzfrequenz erfolgt. Die Resonanzfehlerüberwachungseinheit ist zur Abschaltung des Resonanzwandlers bei Detektion einer Annäherung des Betriebs des Resonanzwandlers an den Resonanzbereich ausgebildet. Die Resonanzfehlerüberwachungseinheit tritt hierbei insbesondere nur dann - durch Abschaltung des Resonanzwandlers - in Aktion, wenn durch die Nachregelung der Frequenz die Annäherung an den Resonanzbereich nicht hinreichend ausgeglichen werden kann, insbesondere wenn der Resonanzwandler zu schnell in die Nähe seines Resonanzbereichs gerät, um dies durch die Nachregelung sicher ausgleichen zu können.

Vorzugsweise dient die Resonanztrenderkennungseinheit nicht ausschließlich zur Nachregelung der Frequenz des Resonanzwandlers, sondern darüber hinaus auch zur Abschaltung des Resonanzwandlers, wenn - trotz versuchter Nachregelung der Frequenz - eine kritische Annäherung an die Resonanzfrequenz detektiert wird. In dieser Ausführung der Erfindung sind also sowohl die Resonanzfehlerüberwachungseinheit als auch die Resonanztrenderkennungseinheit zur Abschaltung des Resonanzwandlers bei Detektion einer Annäherung des Betriebs des Resonanzwandlers an den Resonanzbereich ausgebildet. Allerdings ist hierbei die Reaktionsgeschwindigkeit der Resonanzfehlerüberwachungseinheit höher als die Reaktionsgeschwindigkeit der Resonanztrenderkennungseinheit, so dass bei schneller, sprunghafter Annäherung an die Resonanzfrequenz der Resonanzwandler sicher unter Wirkung der Resonanzfehlererkennungseinheit abgeschaltet wird, während die Resonanztrenderkennungseinheit besonders sensitiv auf eine schleichende (zeitlich langsam fortschreitende) Annäherung an die Resonanzfrequenz reagiert.

Die Erfindung geht von der Überlegung aus, dass ein Resonanzwandler am wirtschaftlichsten nahe seiner Resonanzfrequenz betreibbar ist, wobei diese nicht genau getroffen werden sollte, um eine Überlastung von Bauteilen zu vermeiden. Ein störungsfreier Betrieb eines Resonanzwandlers ist insbesondere möglich, solange die Frequenz zuverlässig oberhalb der Resonanzfrequenz, das heißt im überresonanten Bereich, gehalten wird. Dagegen kann ein Übergang vom überresonanten Bereich in den unterresonanten Bereich im ungünstigsten Fall zu einer Zerstörung von Bauteilen, insbesondere Leistungshalbleitern, führen.

Bei der Verwendung eines Resonanzwandlers in einem kabellosen Batterieladesystem für Elektrofahrzeuge ist Energie von einer ortsfesten Ladestation zum Elektrofahrzeug mittels eines Transformators übertragbar, dessen Primärseite sich in der Ladestation und dessen Sekundärseite sich im Fahrzeug befindet. Das Übertragungsverhalten des Transformators hängt wesentlich von der Anordnung des Fahrzeugs relativ zur Ladestation ab. Es existiert im Allgemeinen eine einzige, ideale Positionierung des Fahrzeugs in Relation zur Ladestation, bei der eine optimale Energieübertragung zwischen Ladestation und Fahrzeug und zugleich ein sicherer Betrieb des Batterieladesystems gegeben ist. Jede Abweichung von dieser idealen Positionierung, die in der Regel bei einer vollkommenen Überdeckung zwischen Primärseite und Sekundärseite des Transformators vorliegt, ändert das Übertragungsverhalten. Ebenso kann eine Änderung des Übertragungsverhaltens aus der Einbringung von Materialien in den Luftspalt zwischen Primär- und Sekundärseite des Transformators resultieren. Die Änderung des Übertragungsverhaltens bedeutet hierbei insbesondere eine Verschiebung der Resonanzfrequenz, welche durch Hauptinduktivität und Streuinduktivität des eine Komponente eines Schwingkreises bildenden Transformators bestimmt ist. In geringerem Umfang können Verschiebungen der Resonanzfrequenz des Weiteren auch durch Temperaturänderungen oder durch die Alterung von Bauteilen auftreten.

Insgesamt gibt es somit zahlreiche mögliche Einflüsse auf die elektrischen Eigenschaften des Batterieladesystems, dessen Primärspannung im ortsfesten Teil mittels des Resonanzwandlers erzeugt wird, welcher beispielsweise durch eine Halb- oder Vollbrücke getrieben wird, wobei ein elektrischer Strom mit zumindest annähernd sinusförmigem Verlauf der Spannung oder Stromstärke parallel zum durch die Leistungselektronik angeregten Schwingkreis ausgekoppelt wird.

Sämtliche der genannten Einflüsse werden gemäß der Erfindung im praktischen Betrieb eines Resonanzwandlers, insbesondere innerhalb eines Batterieladesystems, durch ein mehrstufiges Sicherheitskonzept beherrscht, welches unterschiedliche Komponenten, nämlich insbesondere die Resonanzfehlerüberwachungseinheit und die Resonanztrenderkennungseinheit, umfasst, die sich hinsichtlich ihrer Sensitivität voneinander unterscheiden. Hierbei bewirkt die Resonanztrenderkennungseinheit eine Nachregelung der Frequenz des Resonanzwandlers rechtzeitig vor dem Erreichen eines sicherheitstechnisch kritischen Zustands, so dass eine Abschaltung des Resonanzwandlers in vielen Fällen vermieden werden kann. Der Resonanzwandler wird vielmehr nur dann abgeschaltet, wenn eine kritische Annäherung an den Resonanzbereich durch die Nachregelung nicht vermieden werden kann, beispielsweise weil sich die Resonanzfrequenz zu schnell und/oder stark ändert. in diesen Fällen ermöglicht die bevorzugt redundante, bereits auf Trends hin zu einem kritischen Zustand reagierende Absicherung des Resonanzwandlers durch die Resonanzfehlererkennungseinheit und durch die Resonanztrenderkennungseinheit selbst bei Konfigurationen mit nicht genau bestimmter Geometrie, wie sie beim Laden eines Elektrofahrzeugs auftreten können, einen sehr wirtschaftlichen Betrieb des Resonanzwandlers im überresonanten Bereich, wobei trotz nicht exakt vorgegebener Betriebsbedingungen lediglich ein geringer Sicherheitsabstand zur Resonanzfrequenz einzuhalten ist.

Der Resonanzwandler wird vorzugsweise unter Nutzung eines zu dessen Ansteuerung eingesetzten Controllers im überresonanten Bereich betrieben, wobei eine Annäherung an die Resonanzfrequenz mittels zweier mit dem Controller zusammenwirkender Module, nämlich der Resonanzfehlerüberwachungseinheit sowie der Resonanztrenderkennungseinheit, überwacht wird, welche mit unterschiedlicher Reaktionsgeschwindigkeit eine Annäherung des Betriebs des Resonanzwandlers an den Resonanzbereich detektieren.

Die Unabhängigkeit der beiden genannten Module, welche jeweils eine Abschaltung des Resonanzwandlers bewirken können, ist insbesondere hinsichtlich der Asynchronität des Controllers bezogen auf die Arbeitsfrequenz einer leistungselektronischen Brückenschaltung des Resonanzwandlers sowie auf die Möglichkeit einer Fehlfunktion des Controllers gewährleistet. Eine gesonderte, aufwändige Sensorik zur Erkennung eines unterresonanten Betriebs des Resonanzwandlers ist aufgrund dessen mehrfacher Absicherung im überresonanten Bereich nicht erforderlich, und daher vorzugsweise auch nicht vorgesehen.

Die Resonanzfehlerüberwachungseinheit umfasst in bevorzugter Ausgestaltung einen Komparator, welcher einen im Resonanzwandler fließenden Strom mit einer Schaltschwelle vergleicht, sowie zwei dem Komparator nachgeschaltete FlipFlops. Hierbei ist vorzugsweise eines der FlipFlops als D-FlipFlop und das weitere FlipFlop als RS-FlipFlop ausgebildet. Das D-FlipFlop ist dabei in bevorzugter Weise direkt mit einem Ausgang des Komparators verbunden, während das RS-FlipFlop mit dem D-FlipFlop verbunden ist. Die Schaltschwelle des Komparators ist vorzugsweise einstellbar.

Die Resonanztrenderkennungseinheit umfasst in bevorzugter Ausgestaltung zwei gegenphasig angesteuerte, kaskadierte (d.h. in Serie geschaltete) Sample&Hold-Schaltungen. Hierbei ist vorzugsweise ein Ausgang der zweiten (nachgeschalteten) Sample&Hold-Schaltung auf einen Analog-Digitalwandler-Eingang des Controllers gelegt. Zur Nachregelung der Frequenz ist vorzugsweise ein Regelalgorithmus, insbesondere in Form eines PI-Reglers, in dem Controller implementiert, dem das Augangssignal der zweiten Sample&Hold-Schaltung als Regelgröße (Ist-Wert) zugeführt ist.

In vorteilhafter Weiterbildung des Verfahrens wird nach einer mindestens durch eines der Module Resonanzfehlerüberwachungseinheit und Resonanztrenderkennungseinheit ausgelösten Abschaltung des Resonanzwandlers dieser mit einer erhöhten Frequenz automatisch wieder in Betrieb genommen. Nach der automatischen Wiederinbetriebnahme des Resonanzwandlers wird die Frequenz, mit der dieser betrieben wird, vorzugsweise schrittweise wieder verringert.

Der Vorteil der Erfindung liegt insbesondere darin, dass ein Resonanzwandler zuverlässig im überresonanten Bereich, aber nahe seiner Resonanzfrequenz betreibbar ist, indem eine mehrfache Absicherung einer unzulässigen Annäherung an die Resonanzfrequenz vorgesehen ist. Zu diesem Zweck existieren verschiedene Module, nämlich eine Resonanzfehlerüberwachungseinheit und eine Resonanztrenderkennungseinheit, welche bei Abweichungen vom bestimmungsgemäßen Betrieb zunächst eine Nachregelung (geregelte Erhöhung oder Verringerung) der Frequenz, sowie bei Versagen der Nachregelung eine Abschaltung des Resonanzwandlers bewirken. Vorzugsweise reagieren die mehreren Module in Hinblick auf die Abschaltung des Resonanzwandlers dabei redundant, aber mit unterschiedlicher Trägheit, um sowohl auf langsame als auch auf schnelle Änderungen der Resonanzfrequenz stets angemessen reagieren zu können.

Nachfolgend wird ein Ausführungsbeispiel der Erfindung anhand einer Zeichnung näher erläutert. Hierin zeigen, teilweise in grober Vereinfachung:
- FIG 1: in einem Blockdiagramm ein Batterieladesystem zum kabellosen Laden einer Batterie mit einem Resonanzwandler,
- FIG 2: in einer vereinfachten Darstellung das Batterieladesystem nach FIG 1 mit veranschaulichtem Regelkreis,
- FIG 3: eine weitere vereinfachte Darstellung des Batterieladesystems nach FIG 1, in der die für den Regelkreis relevante Sensorik und Aktorik näher dargestellt ist,
- FIG 4: eine innerhalb des Batterieladesystems nach FIG 1 vorgesehene Schaltungsanordnung, welche den Resonanzwandler sowie eine Ansteuerschaltung zu dessen Ansteuerung umfasst,
- FIG 5: in einem ersten Ausschnitt einen Frequenzgenerator der Schaltungsanordnung nach FIG 4,
- FIG 6: in einem zweiten Ausschnitt eine Kurzschlussüberwachungseinheit der Schaltungsanordnung nach FIG 4,
- FIG 7: in einem dritten Ausschnitt eine Resonanzfehlerüberwachungseinheit der Schaltungsanordnung nach FIG 4,
- FIG 8: in einem vierten Ausschnitt eine Resonanztrenderkennungseinheit der Schaltungsanordnung nach FIG 4,
- FIG 9: die Schaltungsanordnung nach FIG 4 mit im Vergleich zu FIG 4 detaillierterer Darstellung einzelner Module, nämlich des Frequenzgenerators, der Kurzschlussüberwachungseinheit, der Resonanzfehlerüberwachungseinheit, sowie der Resonanztrenderkennungseinheit.

Einander entsprechende Teile oder Parameter sind in allen Figuren mit den gleichen Bezugszeichen gekennzeichnet.

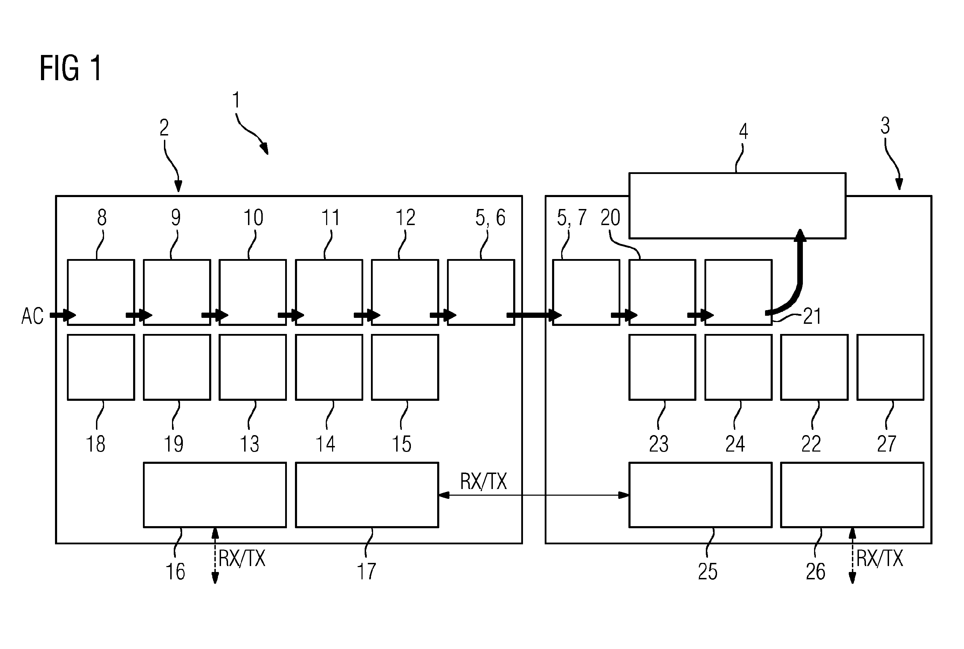

Ein insgesamt mit dem Bezugszeichen 1 gekennzeichnetes, in FIG 1 in Form eines Blockdiagramms dargestelltes Batterieladesystem 1 setzt sich zusammen aus einer Primärseite 2, welche ortsfest ist, und einer Sekundärseite 3, welche sich an Bord eines nicht weiter dargestellten Elektrofahrzeugs mit zu ladender Batterie 4 befindet.

Die Schnittstelle zwischen der Primärseite 2 und der Sekundärseite 3 ist gebildet durch einen Transformator 5 mit einer primärseitigen Wicklung 6 (Primärspule) und einer sekundärseitigen Wicklung 7.

Die Primärseite 2 des Batterieladesystems 1 umfasst weiter einen Gleichrichter 8, einen Leistungsfaktorkorrekturfilter 9 (PFC = Power Factor Correction), einen Zwischenkreis 10 (DC-Link), sowie einen Verstärker 11, welcher elektrische Leistung einem Resonanzwandler 12 zuführt, der mit einem Schwingkreis arbeitet, dessen Resonanzfrequenz unter anderem von der Induktivität der primärseitigen Wicklung 6 des Transformators 5 abhängt.

Der Resonanzwandler 12 wird angesteuert mit Hilfe eines Controllers 13, welcher sich ebenfalls auf der Primärseite 2 des Batterieladesystems 1 befindet. Zusätzlich sind ein primärseitiger Stromsensor 14 sowie ein primärseitiger Spannungssensor 15 vorhanden. Eine Kommunikationseinheit 16 ist zum Austausch von Daten, etwa mit einem übergeordneten Controller, vorgesehen. Ein zusätzliches, internes Kommunikationselement 17 ist für Kalibrierungs- und Wartungszwecke verwendbar. Weitere Komponenten der Primärseite 2 sind eine Spannungsversorgung 18 und eine Lüftersteuerung 19.

Auf der Sekundärseite 3 befinden sich, der sekundärseitigen Wicklung 7 nachgeschaltet, eine Kapazität 20 sowie ein Gleichrichter 21. Ähnlich wie die Primärseite 2 weist auch die Sekundärseite 3 einen Controller 22, einen Stromsensor 23, sowie einen Spannungssensor 24 auf. Analog zum internen primärseitigen Kommunikationselement 17 ist auf der Sekundärseite 3 ein internes Kommunikationselement 25 insbesondere für Kalibrierungs- und Wartungszwecke vorgesehen. Statt einer Kommunikationseinheit 16 ist auf der Sekundärseite 3 ein in das Fahrzeug eingebautes Fahrzeugkommunikationselement 26 vorhanden. Anstelle einer eine Wechselspannung liefernden Spannungsversorgung 18, wie auf der Primärseite 2 vorgesehen, weist die Sekundärseite 3 lediglich eine Hilfsspannungsversorgung 27 auf.

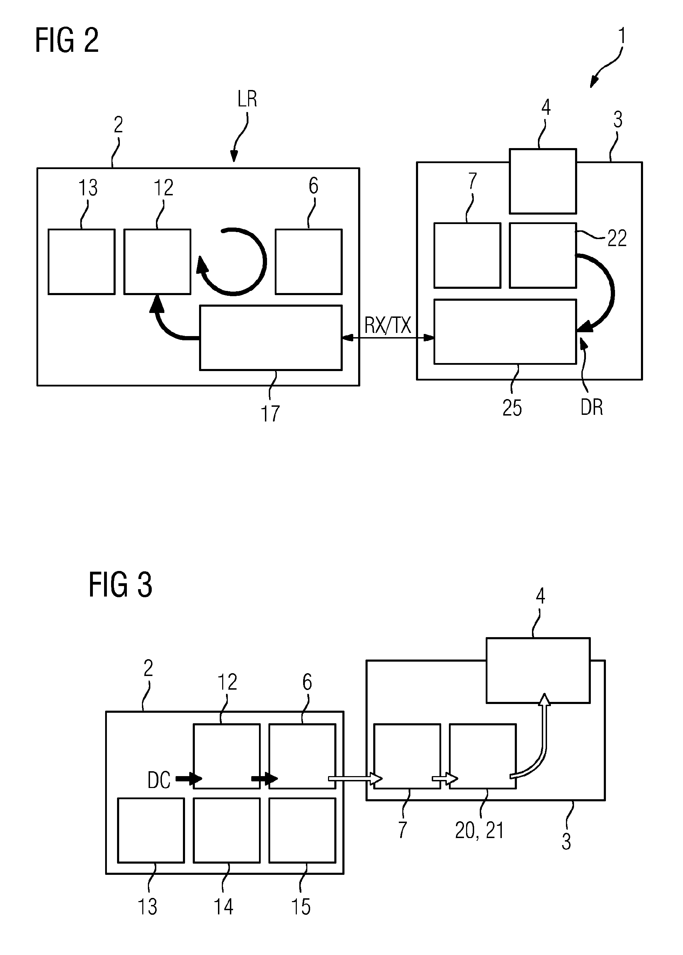

Grundzüge der Regelung des Batterieladesystems 1 sind in FIG 2 veranschaulicht, welche in vereinfachter Darstellung die Anordnung nach FIG 1 zeigt. Erkennbar ist ein primärseitiger Leistungsregelkreis RL. Eine Stromregelung auf der Sekundärseite 3 ist nicht vorgesehen. Eine Datenrückkopplung DR von der Sekundärseite 3 zur Primärseite 2 betrifft Kalibrierdaten, welche auf der Sekundärseite 3 zur Leistungskalibrierung des Batterieladesystems 1 zyklisch (allerdings in variierenden Zeitintervallen) erfasst werden.

In FIG 3 ist das Batterieladesystem 1 im Vergleich zu FIG 1 und FIG 2, insbesondere was die Sekundärseite 3 betrifft, nochmals vereinfacht dargestellt, wobei die Kapazität 20 und der sekundärseitige Gleichrichter 21 in diesem Fall als eine einzige Komponente visualisiert sind. Die primärseitige Sensorik für die Spannungs- und Stromstärkeerfassung ist hier detaillierter dargestellt.

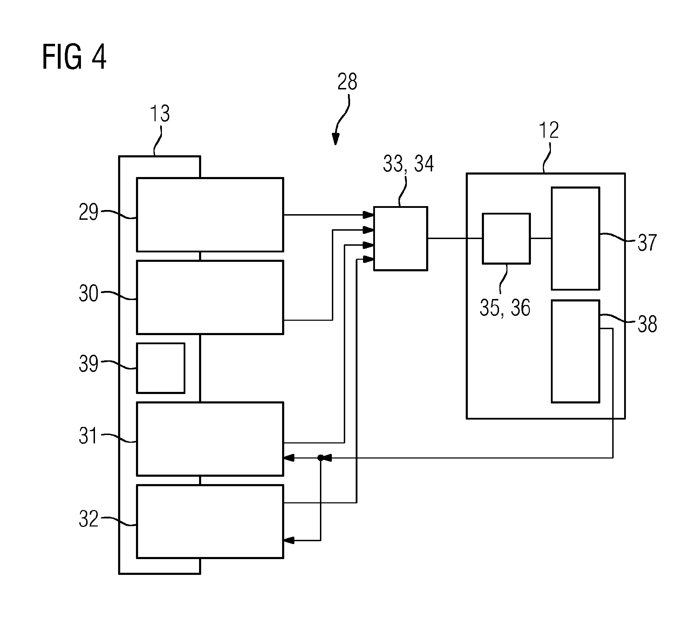

Die FIG 4 zeigt in größerer Detailliertheit einen Ausschnitt aus der Anordnung nach FIG 1, nämlich eine Schaltungsanordnung 28, welche den primärseitigen Controller 13 und den Resonanzwandler 12 umfasst. Der Controller 13 bildet zusammen mit vier Modulen 29,30,31,32, auf welche nachstehend noch näher eingegangen wird, sowie einer Verknüpfungsschaltung 33 eine Ansteuerschaltung 34 zur Ansteuerung des Resonanzwandlers 12. Der Resonanzwandler 12 umfasst eine Mehrzahl an Leistungselektronikkomponenten, nämlich Gate-Treiber 35,36, Gates-Brücke 37 und Stromwandler 38. Eine Prozessoreinheit 39 ist Teil des Controllers 13.

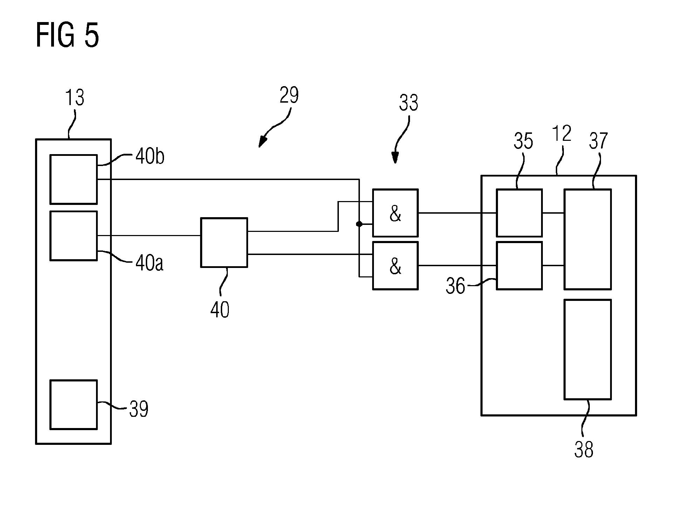

Bei den einzelnen Module 29,30,31,32, welche mit dem Controller 13 zusammenwirken, handelt es sich um einen Frequenzgenerator 29, eine Kurzschlussüberwachungseinheit 30, eine Resonanzfehlerüberwachungseinheit 31 und eine Resonanztrenderkennungseinheit 32. Diese Module 29,30,31,32 werden im Folgenden anhand der FIG 5 bis 8 näher erläutert.

Der Frequenzgenerator 29 (Dual Phase Frequency Generator, FIG 5) ist für den Betrieb des Resonanzwandlers 12 erforderlich und weist einen vom Controller 13 aus gesteuerten, digital oder analog aufgebauten, in der Frequenz steuerbaren Generator 40, welcher hier nach Art eines spannungsgesteuerten Oszillators (VCO = voltage controlled oscillator) oder digitalen (programmierbaren) Teilers ausgebildet ist, auf. Die Frequenz des Frequenzgenerators 29 ist in hinreichend feinen Intervallen steuer- und regelbar, um zuverlässig einen unterresonanten Betrieb des Resonanzwandlers 12 bei einer Änderung der Frequenz verhindern zu können. Die Frequenz des Generators 40 ist von dem Controller über eine Schnittstelle 40a einstellbar. Über eine Schnittstelle 40b (GPIO = General Purpose Input Output) steuert der Controller 13 die Verknüpfungsschaltung 33 an, um den Generator 40 mit dem Resonanzwandler 12 zu verknüpfen oder von dem Resonanzwandler 12 zur Abschaltung des letzteren zu trennen.

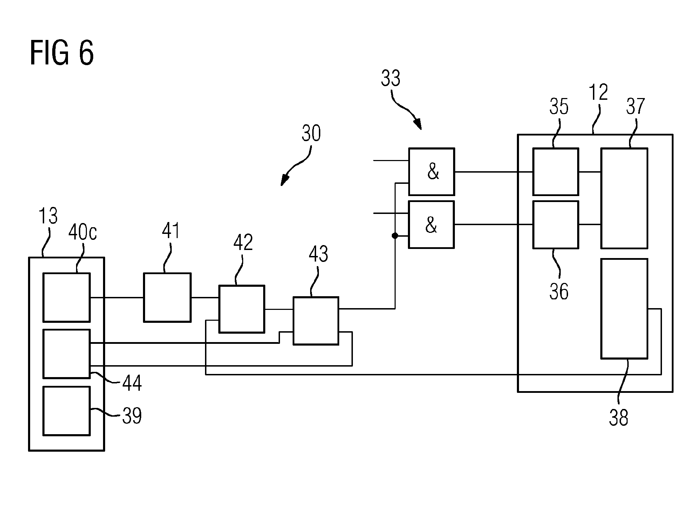

Die Kurzschlussüberwachungseinheit 30 (FIG 6) dient ausschließlich der Überwachung des durch Komponenten des Resonanzwandlers 12 fließenden Stromes auf Kurzschluss. Die Kurzschlussüberwachungseinheit 30 umfasst einen durch den Controller 13 über eine Schnittstelle 40c einstellbaren Maximalstrombaustein 41, einen an diesen angeschlossenen Komparator 42, welcher auch an den Stromwandler 38 angeschlossen ist, sowie ein RS-FlipFlop 43, das mit dem Komparator 42, mit einer Schnittstelle 44 (GPIO = General Purpose Input/Output) des Controllers 13 und mit der Verknüpfungsschaltung 33, welche direkt mit dem Resonanzwandler 12 zusammenwirkt und diesen im Fehlerfall abschaltet, verbunden ist.

Eine Abschaltung des Resonanzwandlers 12 bei einem Kurzschluss erfolgt hierbei selbsttätig durch die Kurzschlussüberwachungseinheit 30, ohne unmittelbaren Eingriff des Controllers 13. Dieser dient in diesem Zusammenhang lediglich der Einstellung eines Stromgrenzwertes. Die Kurzschlussüberwachungseinheit 30 zeichnet sich von daher durch eine besonders robuste Funktion aus. Von zusätzlichem Vorteil ist die Tatsache, dass der Stromwandler 38 mehrfach, nämlich zusätzlich auch in der Resonanzfehlerüberwachungseinheit 31 und in der Resonanztrenderkennungseinheit 32, nutzbar ist.

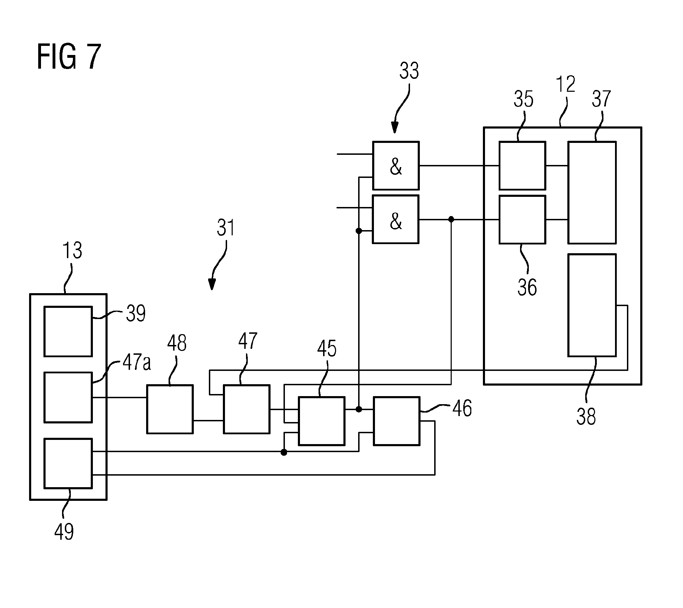

Die Resonanzfehlerüberwachungseinheit 31 (FIG 7) dient dazu, den Resonanzwandler 12 zuverlässig im überresonanten Bereich zu betreiben. Ein Betrieb eines Resonanzwandlers im überresonanten Bereich ist prinzipiell aus dem eingangs zitierten Dokument DE 10 2008 027 126 A1 bekannt, wobei zur Erläuterung des technischen Hintergrunds insbesondere auf die Figuren 1B, 3A, 3B, 4A, 4B dieses Dokuments verwiesen wird.

Der Resonanzwandler 12 wird durch die Resonanzfehlerüberwachungseinheit 31 im Fehlerfall kurz vor Erreichen eines kritischen Zustands, nämlich dem Erreichen der Resonanzfrequenz, abgeschaltet. Diese Funktion ist mit Hilfe von zwei FlipFlops 45,46, nämlich einem D-FlipFlop 45 und einem RS-FlipFlop 46, realisiert. Hierbei ist das D-FlipFlop 45 mit dem Ausgang eines Komparators 47 verbunden, dessen Eingänge an den Stromwandler 38 sowie an einen durch den Controller 13 über eine Schnittstelle 47a einstellbaren Resonanzgrenzstrombaustein 48 angeschlossen sind.

Die in FIG 6 sowie FIG 7 jeweils als separate Elemente dargestellten Bausteine 41,48, welche zusammen mit weiteren Elementen jeweils der Begrenzung eines Stromes dienen, können abweichend von den symbolisierten Darstellungen auch innerhalb des Controllers 13 realisiert sein. In beiden Fällen ist die sicherheitstechnisch entscheidende Abschaltfunktion, welche durch das FlipFlop 43 beziehungsweise die FlipFlops 45,46 ausgelöst wird, jedoch controllerunabhängig gegeben. Im Fall der Resonanzfehlerüberwachungseinheit 31 hat dies insbesondere den Vorteil, dass eine sehr schnelle Schaltung, separat für jeden Schwingungszug, erfolgt. Die Resonanzfehlerüberwachungseinheit 31 zeichnet sich damit durch eine sehr hohe Reaktionsgeschwindigkeit aus. Zudem basiert ihre Schaltfunktion auf einfachen, unempfindlichen Bauteilen, insbesondere den FlipFlops 45,46.

In das D-FlipFlop 45 wird mit einer definierten Taktflanke, die aus dem Gate-Source-Brückenansteuersignal, das den Resonanzwandler 12 ansteuert, gewonnen wird, das Ausgangssignal des Komparators 47 übernommen. Der Komparator 47 stellt fest, ob der vom Stromwandler 38 gelieferte Strom Werte kleiner als Null annimmt, wobei seine Schaltschwelle mittels des Controllers 13 einstellbar ist. Falls die Schaltschwelle tatsächlich auf einen Wert kleiner als Null gesetzt ist, wird durch den Komparator 47 angezeigt, ob bereits während der Brückenumschaltphase ein negativer Strom durch den Ansteuerhalbleiter des Resonanzwandlers 12 fließt.

In vorteilhafter Weise ist die Schaltschwelle des Komparators 47 auf einen geringen Wert größer als Null setzbar, so dass ein negativer Gegenstrom sicher vermieden und hierbei auch die Trägheit der Abschaltung berücksichtigt wird. Im Fall des Abschaltens des Resonanzwandlers 12 sperrt das D-FlipFlop 45 dessen Brückenansteuerung, wobei es sich um einen dynamischen Prozess handelt. Zum sicheren Erkennen dieses Zustandes ist dem D-FlipFlop 45 das RS-FlipFlop 46 nachgeschaltet, welches an eine Schnittstelle 49 des Controllers 13 angeschlossen ist. Damit erhält der Controller 13 eine Information über den aktuellen Status der die beiden D-FlipFlops 45,46 umfassenden Schaltung.

Nach einer mittels der D-FlipFlops 45,46 ausgelösten Abschaltung des Resonanzwandlers 12 wird der im regulären Betrieb den Resonanzwandler 12 mit einem Eingangssignal speisende Frequenzgenerator 29 gesperrt. Ebenso werden die D-FlipFlops 45,46 zurückgesetzt.

Ein erneuter, automatischer Anlauf des Resonanzwandlers 12 erfolgt mit einer erhöhten Frequenz, verglichen mit der zuvor im bestimmungsgemäßen Betrieb gegebenen Frequenz. Die zunächst eingestellte, erhöhte Frequenz wird im Laufe des weiteren Betriebes schrittweise wieder abgesenkt, wobei die Schrittweite der Frequenzabsenkung gering genug ist, um eine zu starke Annäherung an die Resonanzfrequenz und damit eine nochmalige Abschaltung zu vermeiden.

Die Resonanzfehlerüberwachungseinheit 31 tritt in Funktion, wenn entweder die Resonanztrenderkennungseinheit 32 nicht ausreichend schnell auf eine Abweichung von zulässigen Betriebsparametern des Batterieladesystems 1 anspricht oder der Controller 13 defekt ist. Der erstgenannte Fehlerfall ist insbesondere denkbar, wenn mit hoher Geschwindigkeit ein den Magnetkreis störender Gegenstand zwischen die primärseitige Wicklung 6 und die sekundärseitige Wicklung 7 in den Luftspalt des Transformators 5 eingebracht wird oder sich die geometrische Relation zwischen Primärseite 2 und Sekundärseite 3 während des Ladevorgangs ändert. Auch eine rasche Laständerung auf der Sekundärseite 3 kann eine Auslösung der Resonanzfehlerüberwachungseinheit 31 zur Folge haben.

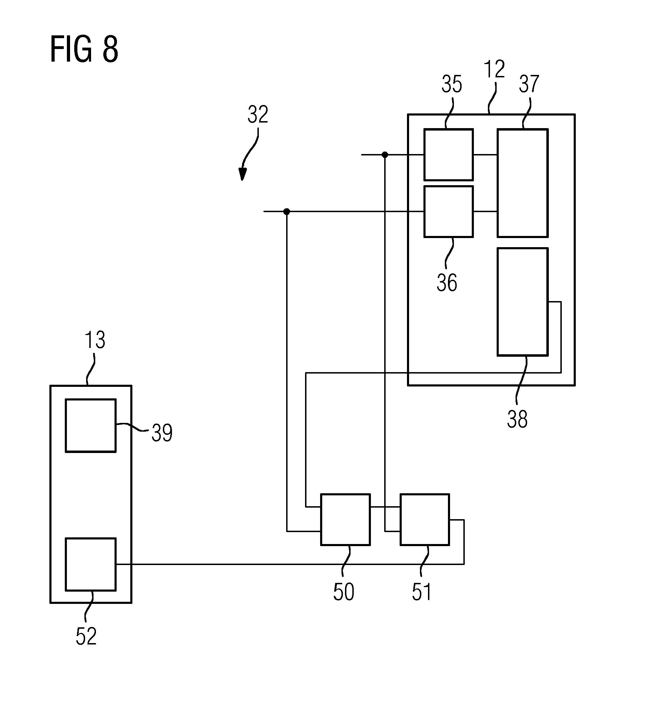

Die Resonanztrenderkennungseinheit 32 (FIG 8) weist eine im Vergleich zur Resonanzfehlerüberwachungseinheit 31 geringere Reaktionsgeschwindigkeit auf, dient jedoch grundsätzlich dem gleichen Zweck, nämlich der Abschaltung des Resonanzwandlers 12 bei einer unzulässigen Abweichung vom bestimmungsgemäßen Betrieb. Des Weiteren dient sie zur Nachregelung der Frequenz des Resonanzwandlers 12, um eine Annäherung des Resonanzwandlers 12 an seinen Resonanzbereich durch entsprechende Frequenzänderung auszugleichen und den Resonanzwandler 12 somit im überresonanten Betrieb zu halten.

Die Resonanztrenderkennungseinheit 32 umfasst zwei gegenphasig angesteuerte, kaskadierte Sample&Hold-Schaltungen 50,51. Eingänge beider Sample&Hold-Schaltungen 50,51 sind hierbei eingangsseitig mit dem Resonanzwandler 12 verbunden. Ein weiterer Eingang der ersten Sample&Hold-Schaltung 50 ist an den Ausgang des Stromwandlers 38 angeschlossen. Ein Ausgang der ersten Sample&Hold-Schaltung 50 ist mit einem weiteren Eingang der zweiten Sample&Hold-Schaltung 51 verbunden. Ein Ausgang ("Phase") der zweiten Sample&Hold-Schaltung 51 ist direkt auf einen Eingang eines Analog-Digital-Wandlers 52 des Controllers 13 gelegt, welcher damit eine Information über die Abweichung des Resonanzpunktes des Resonanzwandlers 12 von der aktuellen Frequenz des Frequenzgenerators 29 erhält.

Die erste Sample&Hold-Schaltung 50 zeichnet während der vollen Gate-Ansteuerphase den Drain- bzw. Brückenstrom als Analogspannungswert auf und behält diesen genau zum Abschaltzeitpunkt dieser Phase statisch bei. Gegenphasig hierzu nimmt dann die zweite Sample&Hold-Schaltung 51 den gespeicherten Analogspannungswert auf und stellt ihn dem Analog-DigitalWandler 52 des Controllers 13 zur Verfügung. Da die variable Frequenz des Frequenzgenerators 29 asynchron zur Taktfrequenz des Controllers 13 ist, sind Stromabweichungen mittels der kaskadierten Sample&Hold-Schaltung 50,51 besonders gut verfolgbar. Damit ist mit Hilfe des Controllers 13 ein Arbeitspunkt des Resonanzwandlers 12 wählbar, welcher nahe genug am Resonanzpunkt liegt, um einen wirtschaftlichen Betrieb des Batterieladesystems 1 zu realisieren, gleichzeitig jedoch einen sicheren Abstand zum Resonanzpunkt hält. Für die entsprechende Nachregelung der Frequenz ist in dem Controller 13 ein PI-Regler programmtechnisch implementiert, der das digitalisierte Ausgangssignal der zweiten Sample&Hold-Schaltung als Regelgröße (Ist-Wert) erhält. Der Controller 13 und der darin implementierte PI-Regler bilden somit einen funktionalen Bestandteil der Resonanztrenderkennungseinheit 32 (genauer des durch die Resonanztrenderkennungseinheit 32 gebildeten Regelkreises).

Die Resonanztrenderkennungseinheit 32, welche im Vergleich zur Resonanzfehlerüberwachungseinheit 31 und besonders im Vergleich zur Kurzschlussüberwachungseinheit 30 relativ träge anspricht, tritt in Funktion, solange auf der Sekundärseite 3 eine sich nur langsam und stetig ändernde Last vorhanden ist und sich der Wirkungsgrad des Batterieladesystems 1 ebenfalls höchstens langsam und stetig ändert. Die Abschaltfunktion der Resonanztrenderkennungseinheit 32 kommt dabei nur dann zum Tragen, wenn eine kritische Annäherung an den Resonanzbereich trotz der Nachregelung der Frequenz nicht verhindert werden kann.

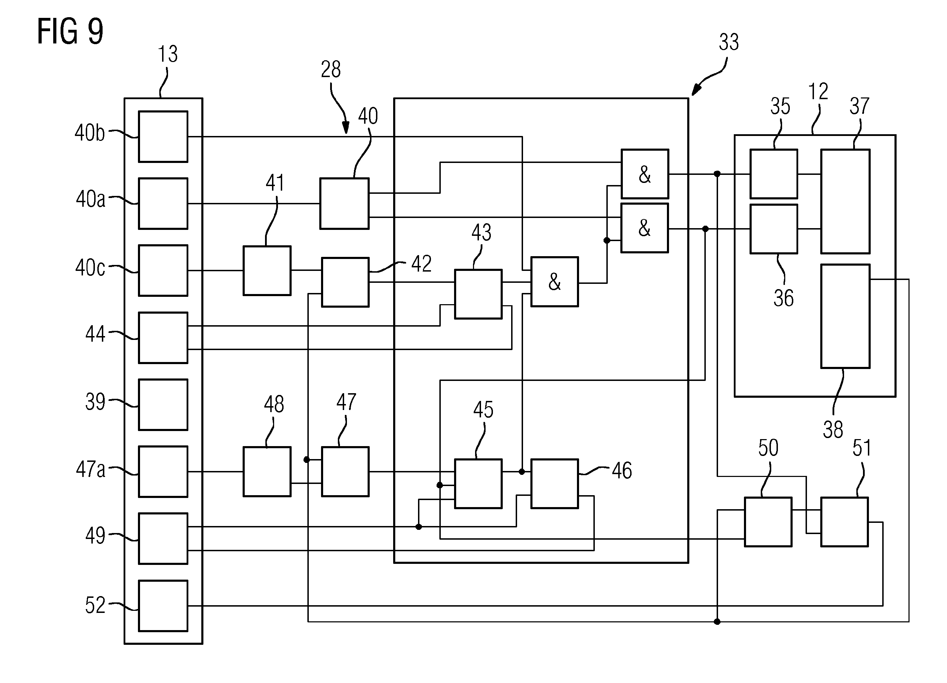

Die FIG 9 zeigt die Schaltungsanordnung 28, wobei - anders als in FIG 4 - die einzelnen Module 29,30,31,32 nicht lediglich als symbolisierte Blöcke, sondern detaillierter, entsprechend den FIG 5 bis 8, dargestellt sind. Unabhängig von der genauen hardwaremäßigen Aufteilung der Module 29,30,31,32 ist eine insgesamt dreifache Absicherung des Batterieladesystems 1 durch die Kurzschlussüberwachungseinheit 30, die Resonanzfehlerüberwachungseinheit 31, sowie die Resonanztrenderkennungseinheit 32 gegeben, welche insbesondere den variablen Betriebsbedingungen beim kabellosen Laden eines Elektrofahrzeugs gerecht wird.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

## Patentansprüche

1. Schaltungsanordnung (28), umfassend einen zum Betrieb im überresonanten Bereich ausgebildeten, in eine primärseitige Wicklung (6) eines Transformators (5) Energie einspeisenden Resonanzwandler (12) sowie eine zu dessen Ansteuerung vorgesehene Ansteuerschaltung (34), welche mehrere Module (29,30,31,32), nämlich
- einen mit variabler Frequenz steuerbaren Frequenzgenerator (29),
- eine zum Schutz von Halbleiterbauteilen des Resonanzwandlers (12) ausgebildete Kurzschlussüberwachungseinheit (30),
- eine Resonanzfehlerüberwachungseinheit (31), sowie
- eine Resonanztrenderkennungseinheit (32)
aufweist, wobei die Resonanztrenderkennungseinheit (32) zur Nachregelung der Frequenz des Resonanzwandlers (12) ausgebildet ist, um eine Annäherung des Betriebs des Resonanzwandlers (12) an den Resonanzbereich auszugleichen, und wobei die Resonanzfehlerüberwachungseinheit (31) zur Abschaltung des Resonanzwandlers (12) bei Detektion einer Annäherung des Betriebs des Resonanzwandlers (12) an den Resonanzbereich ausgebildet ist.

2. Schaltungsanordnung (28) nach Anspruch 1,
**dadurch gekennzeichnet, dass** auch die Resonanztrenderkennungseinheit (32) zur Abschaltung des Resonanzwandlers (12) bei Detektion einer Annäherung des Betriebs des Resonanzwandlers (12) an den Resonanzbereich ausgebildet ist, wobei die Reaktionsgeschwindigkeit der Resonanzfehlerüberwachungseinheit (31) die Reaktionsgeschwindigkeit der Resonanztrenderkennungseinheit (32) übersteigt.

3. Schaltungsanordnung (28) nach Anspruch 1 oder 2,
**dadurch gekennzeichnet, dass** die Resonanzfehlerüberwachungseinheit (31) einen Komparator (47), welcher einen im Resonanzwandler fließenden Strom mit einer Schaltschwelle vergleicht, sowie zwei dem Komparator (47) nachgeschaltete FlipFlops (45,46) umfasst.

4. Schaltungsanordnung (28) nach Anspruch 3,
**dadurch gekennzeichnet, dass** eines der FlipFlops (45,46) als D-FlipFlop (45) und das weitere FlipFlop als RS-FlipFlop (46) ausgebildet ist.

5. Schaltungsanordnung (28) nach Anspruch 3 oder 4,
**dadurch gekennzeichnet, dass** das D-FlipFlop (45) direkt mit einem Ausgang des Komparators (47) und das RS-FlipFlop (46) mit dem D-FlipFlop (45) verbunden ist.

6. Schaltungsanordnung (28) nach einem der Ansprüche 3 bis 5,
**dadurch gekennzeichnet, dass** die Schaltschwelle des Komparators (47) einstellbar ist.

7. Schaltungsanordnung (28) nach einem der Ansprüche 1 bis 6,
**dadurch gekennzeichnet, dass** die Resonanztrenderkennungseinheit (32) zwei gegenphasig angesteuerte, kaskadierte Sample&Hold-Schaltungen (50,51) umfasst.

8. Schaltungsanordnung (28) nach Anspruch 7,
**dadurch gekennzeichnet, dass** ein Ausgang der nachgeschalteten Sample&Hold-Schaltung (51) direkt mit einem Eingang eines Analog-Digital-Wandlers (52) eines zur Ansteuerung des Resonanzwandlers (12) vorgesehenen Controllers (13) verbunden ist.

9. Verwendung einer Schaltungsanordnung (28) nach einem der Ansprüche 1 bis 8 in einem kabellosen Batterieladesystem (1).

10. Verwendung nach Anspruch 9,
**dadurch gekennzeichnet, dass** die primärseitige Wicklung (6) des Transformators (5) in einer ortsfesten Ladestation und eine zugehörige sekundärseitige Wicklung (7) in einem Fahrzeug mit zu ladender Batterie (4) angeordnet ist.

11. Verfahren zum Betreiben eines Resonanzwandlers (12), welcher unter Nutzung eines zu dessen Ansteuerung eingesetzten Controllers (13) im überresonanten Bereich betrieben wird, wobei eine Annäherung an die Resonanzfrequenz mittels mindestens zweier mit dem Controller (13) zusammenwirkender Module (31,32), nämlich einer Resonanzfehlerüberwachungseinheit (31) sowie einer Resonanztrenderkennungseinheit (32), überwacht wird, wobei die Resonanztrenderkennungseinheit (32) eine Annäherung des Betriebs des Resonanzwandlers (12) an den Resonanzbereich mit geringerer Reaktionsgeschwindigkeit detektiert als die Resonanzfehlerüberwachungseinheit (31).

12. Verfahren nach Anspruch 11,
**dadurch gekennzeichnet, dass** zum Ausgleich einer von der Resonanztrenderkennungseinheit (32) detektierten Annäherung an die Resonanzfrequenz die Frequenz des Resonanzwandlers (12) nachgeregelt wird.

13. Verfahren nach Anspruch 11 oder 12,
**dadurch gekennzeichnet, dass** nach einer mindestens durch eines der Module (31,32) Resonanzfehlerüberwachungseinheit (31) und Resonanztrenderkennungseinheit (32) ausgelösten Abschaltung des Resonanzwandlers (12) dieser mit einer erhöhten Frequenz automatisch wieder in Betrieb genommen wird.

14. Verfahren nach Anspruch 13,
**dadurch gekennzeichnet, dass** nach der automatischen Wiederinbetriebnahme des Resonanzwandlers (12) die Frequenz, mit der dieser betrieben wird, schrittweise verringert wird.

15. Verfahren nach einem der Ansprüche 11 bis 14,
**dadurch gekennzeichnet, dass** mittels einer Kurzschlussüberwachungseinheit (30) zusätzlich ein durch Halbleiterbauteile des Resonanzwandlers (12) fließender Strom überwacht wird.
